**Europäisches Patentamt**

**European Patent Office**

**Office européen des brevets**

(19)

(11) Veröffentlichungsnummer: **0 039 055**

**A1**

(12) # EUROPÄISCHE PATENTANMELDUNG

(21) Anmeldenummer: 81103095.6

(22) Anmeldetag: 24.04.81

(51) Int. Cl.³: **A 61 M 1/03**
**B 01 D 13/00**

(30) Priorität: 30.04.80 DE 3016636

(43) Veröffentlichungstag der Anmeldung:
04.11.81 Patentblatt 81/44

(84) Benannte Vertragsstaaten:
AT BE CH DE FR GB IT LI LU NL SE

(71) Anmelder: BOEHRINGER MANNHEIM GMBH
Sandhofer Strasse 112-132 Postfach 31 01 20
D-6800 Mannheim 31-Waldhof(DE)

(72) Erfinder: Schlieder, Klaus
Schwanenstrasse 65
D-6800 Mannheim 51(DE)

(72) Erfinder: Bayer, Gernold
Speyerer Strasse 28
D-6831 Brühl(DE)

(72) Erfinder: Sensbach, Fred
Im Riedgarten 2
D-6840 Lampertheim(DE)

(54) **Stoffaustauschmodul, insbesondere für medizinische Anwendungen, sowie Verfahren zu seiner Herstellung.**

(57) Stoffaustauschmodul (10), insbesondere für medizinische Anwendungen, mit einem länglichen Körper (28) mit zwei offenen Enden, mit zwei Deckelteilen (30), durch die die Enden verschließbar sind und mit einer Füllung aus Stoffaustauschfasern (14), die im wesentlichen parallel zu der Längsrichtung des Körpers (28) verlaufen und im Bereich der Enden des Körpers (28) mittels einer Vergußmasse (16) miteinander und mit dem Körper (28), den die Fasern (14) ungebenden Raum abdichtend, vergossen sind. Eine gleichmäßige Strömungsverteilung und ein kleiner Blutraum werden dabei dadurch erreicht, daß mindestens im Bereich der Enden des Körpers (28) ein Stützring (44) in einer im wesentlichen zur Längsrichtung des Moduls senkrechten Ebene vorgesehen ist, der die Stoffaustauschfaserfüllung (14) umgibt und, die Faserfüllung zentrierend und im Querschnitt formstabilisierend, auf einer entsprechend geformten Struktur (48) des Körpers (28) abgestützt ist, sowie dadurch, daß die Stoffaustauschfaserfüllung (14) über den größten Teil ihrer Länge von einem Netzschlauch (40) umgeben ist.

Fig. 2

Stoffaustauschmodul, insbesondere für medizinische
Anwendungen, sowie Verfahren zu seiner Herstellung

Die Erfindung betrifft einen Stoffaustauschmodul, insbesondere für medizinische Anwendungen, mit einem
länglichen Körper, mit zwei offenen Enden, mit zwei
Deckelteilen, durch die die Enden verschließbar sind
und mit einer Füllung aus Stoffaustauschfasern, die im
wesentlichen parallel zu der Längsrichtung des Körpers
verlaufen und im Bereich der Enden des Körpers mittels
einer Vergußmasse miteinander und mit dem Körper, den
die Fasern umgebenden Raum abdichtend, vergossen sind.

Derartige Stoffaustauschmodule sind in vielfältiger
Ausführungsform und für sehr verschiedene Anwendungen
bekannt. In der Medizin werden sie beispielsweise als
Dialysatoren (künstliche Niere), als Hämofilter,
Entgiftungsfilter, Permamentfilter oder Plasmaseparatoren
verwendet. Aus dem nicht-medizinischen Bereich sei nur
die Verwendung zur Wasserentsalzung als Beispiel angeführt.

Insbesondere im Bereich der Medizintechnik werden an
Stoffaustauschmodule sehr hohe Anforderungen gestellt.
Diese betreffen sowohl die verwendeten Stoffaustauschfasern, als auch die Ausführung des Gehäuses. Die
Art der verwendeten Stoffaustauschfasern ist nicht
Gegenstand der vorliegenden Erfindung, es können hohle
Stoffaustauschfasern verschiedenster Art verwendet

- 2 -

werden. An das Gehäuse werden neben den selbstverständlichen Anforderungen wie physiologische Unbedenklichkeit der Materialien, Sterilisierbarkeit und Zuverlässigkeit, insbesondere die folgenden Anforderungen gestellt.

Die die Fasern durchströmende zu reinigende Flüssigkeit ist in der Regel Blut, welches auf einem extrakorporalen Kreislauf dem Stoffaustauschmodul zugeführt wird. Es ist daher von größter Wichtigkeit, daß das Volumen, das in dem Stoffaustauschmodul von dem Blut ausgefüllt wird, der sogenannte Blutraum, so klein wie möglich ist. Außerdem muß der Blutraum so gestaltet sein, daß sich eine möglichst glatte Strömungsverteilung auf die Stoffaustauschfasern ergibt, ohne daß größere tote Winkel entstehen. Solche tote Winkel würden insbesondere die Gerinnungsgefahr erheblich erhöhen und dadurch zu einer Gefährdung des Patienten führen.

Der die Stoffaustauschfasern umgebende Raum, in dem sich im Betrieb des Moduls eine Flüssigkeit befindet, die die aus dem Blut entfernten Giftstoffe enthält, muß so gestaltet sein, daß diese Flüssigkeit gleichmäßig abfließt und bei kompakter Bauweise ein möglichst hoher Füllgrad möglich ist, d.h. möglichst viele Stoffaustauschfasern in dem Gehäuse untergebracht werden können. Für den Fall, daß, z.B. bei Dialysatoren, der die Austauschfasern umgebende Raum ebenfalls von einer Flüssigkeit durchströmt wird, die im folgenden der Einfachheit halber als Dialysat bezeichnet wird, kommt es besonders darauf an, daß die Stoffaustauschfasern möglichst gleichmäßig umströmt werden und sich zwischen der Innenwandung des Modulgehäuses und den üblicherweise an diese anliegenden Fasern keine Strömungskanäle ausbilden, also eine sogenannte Randgängigkeit vermieden wird.

Schließlich sollen Stoffaustauschmodule zu medizinischen Zwecken bei möglichst optimaler Erfüllung aller Ansprüche kostengünstig hergestellt werden können. Dies ist besonders wichtig, da es sich in der Regel um nicht wiederverwendbare Teile handelt, so daß die Kosten für die Stoffaustauschmodule die entsprechenden Kosten für die mit ihnen durchgeführten Behandlungen sehr erheblich beeinflussen.

Die bisher bekannten Stoffaustauschmodule sind bezüglich einiger der zuvor erwähnten Forderungen unzureichend. Sie werden in der Regel nach dem Schleudergußverfahren hergestellt, d.h. die an beiden Enden offenen Gehäusekörper werden mit einer Stoffaustauschfaserfüllung beschickt, die auf entsprechende Länge zugeschnitten ist. Danach werden auf beide Enden Vergießformen aufgesetzt und über Schläuche an eine Quelle für Vergießmasse, üblicherweise Polyurethan, angeschlossen. An beiden Enden werden die Stoffaustauschfasern dann durch Einspritzen der Vergießmasse miteinander und mit der Innenwandung des Gehäuses verbunden, während gleichzeitig der Modulkörper mit den Vergießformen mit erheblicher Drehzahl um eine Achse, die senkrecht durch die Mitte seiner Längserstreckung geht, rotiert wird. Durch die Zentrifugalkraft wird die eingespritzte Masse an den Enden des Moduls nach außen gedrückt und dadurch zwischen den Fasern verteilt. Nach dem Aushärten der Vergußmasse wird diese zusammen mit den Fasern beschnitten, so daß die Kanäle im Innern der Fasern frei liegen.

Dieses Verfahren führt zu einer befriedigenden Abdichtung der Stoffaustauschfasern gegeneinander und gegen die Gehäusewand, es ist jedoch durch die beweglichen Teile der Herstellungseinrichtung sehr aufwendig. Außerdem ist das Produkt insoweit unbefriedigend, als die Fasern häufig an den Enden schlecht zentriert in die Gießmasse eingebettet sind. Die Folge davon ist, daß auch verhältnismäßig stark exzentrisch liegende Fasern noch vom Blutstrom erreicht werden. Notwendigerweise hat der Blutraum dadurch ein verhältnismäßig großes Volumen und in vielen Fällen tote Winkel mit den oben beschriebenen negativen Folgen.

Aus der DE-OS 28 25 065 ist ein Hohlfaserdialysator oder Hämofilter bekannt, bei dem die Hohlfasern zu einer Matte zusammengefaßt und auf einem Kern durch Aufrollen aufgebracht sind. Diese bekannte Einrichtung zeichnet sich dadurch aus, daß das Faserbündel beim Aufrollen auf den Kern an seinen Enden gespreizt wird. Zu diesem Zweck sind die Fäden, die längs der Matte laufen und die Hohlfasern zusammenhalten, im Randbereich der Matte dicker ausgeführt. Durch das Aufspreizen des Faserbündels bei dieser bekannten Einrichtung soll aus herstellungstechnischen Gründen das Eindringen der Vergußmasse zwischen die Fasern erleichtert werden. Das Aufspreizen der Hohlfasern an ihren Enden führt jedoch andererseits dazu, daß die Blutzuführung einen entsprechend großen Durchmesser haben muß, so daß sich wiederum ein unerwünscht großer Blutraum ergibt.

Aufgabe der vorliegenden Erfindung ist es nun, die bekannten Stoffaustauschmodule dahingehend zu verbessern, daß eine gleichmäßige Strömungsverteilung und ein möglichst kleiner Blutraum erreicht werden. Die erfindungsgemäßen Stoffaustauschmodule sollen trotz dieser Qualitätsverbesserung einfach und kostengünstig herzustellen sein. Aufgabe der Erfindung ist es daher auch, ein geeignetes Verfahren für die Herstellung der Stoffaustauschmodule anzugeben.

Diese Aufgabe wird bei einem Stoffaustauschmodul der eingangs beschriebenen Art dadurch gelöst, daß mindestens im Bereich der Enden des Körpers ein Stützring in einer im wesentlichen zur Längsrichtung des Moduls senkrechten Ebene vorgesehen ist, der die Stoffaustauschfaserfüllung umgibt und, die Faserfüllung zentrierend und im Querschnitt formstabilisierend, auf einer entsprechend geformten Struktur des Körpers abgestützt ist. Zur Herstellung eines derartigen Stoffaustauschmoduls wird erfindungsgemäß ein Verfahren vorgeschlagen, bei dem die vorbereiteten und in entsprechender Anzahl zusammengefassten Stoffaustauschfasern in den vorgefertigten Modulkörper eingeführt und anschließend untereinander mit diesem abdichtend vergossen werden, das dadurch gekennzeichnet ist, daß die Stoffaustauschfasern vor dem Vergießen im Bereich der Enden des Modulkörpers von einem diese zentrierenden und im Querschnitt formstabilisierenden, sich auf einer entsprechenden Struktur des Körpers abstützenden Stützring umgeben werden.

Dadurch, daß die Stoffaustauschfasern im Bereich der Enden des Modulkörpers durch den Stützring zusammengefaßt und damit formstabilisiert und zentriert sind, ist es möglich, den Querschnitt der Blutzuführung zu den Hohlfaserenden verhältnismäßig klein zu halten. Dadurch ergibt sich ein kleiner Blutraum und ein günstiges Strömungsprofil im Blutkanal mit sehr geringen toten Winkeln. Bei einem Stoffaustauschmodul, bei welchem das Äußere der Fasern von einer Reinigungsflüssigkeit umströmt wird, wie beispielsweise einem Hämodialysator ist der Endbereich des Modulkörpers der Bereich, der außerhalb der Zu- bzw. Abführungen der Reinigungsflüssigkeit liegt. Durch die Verwendung eines Stützrings in diesem Endbereich ergibt sich auch für die Reinigungsflüssigkeit ein günstiger Strömungsverlauf. Herstellungstechnisch erlaubt der Stützring einen glatten und rationellen Verguß.

Der erfindungsgemäß vorgeschlagene Stützring kann aus vielerlei Materialien hergestellt sein, die die Anforderungen erfüllen. Sie müssen eine ausreichende Stabilität aufweisen, um die gewünschte Zentrierung und Formstabilisierung des Faserbündels zu erreichen. Außerdem muß das Stützringmaterial selbstverständlich sterilisierbar und physiologisch unbedenklich sein. Es eignen sich insbesondere verschiedene Kunststoffe, beispielsweise diejenigen, die auch bekanntermaßen für Gehäuse von Stoffaustauschmodulen verwendet werden.

Bevorzugt ist der Stützring in der Vergußmasse angeordnet und von dieser allseitig umgeben. Das Material eines solchen Stützrings sollte so beschaffen sein, daß es mit der Vergußmasse kompatibel ist und beispielsweise keine Weichmacher enthält, die durch das üblicherweise als Vergußmasse verwendete Polyurethan diffundieren könnten. Durch die Anordnung des Stützrings in der Vergußmasse ergibt sich eine besonders gute Zentrierung. Außerdem ist der Stützring nach dem Verguß einwandfrei befestigt.

Ein besonders bevorzugter Stützring weist Stege auf, die auf einer entsprechenden Nut aufliegen, welche sich in unmittelbarer Nähe der Kante des Modulkörpers, also an dessen äußerstem Ende, befindet. Dadurch wird das Faserbündel sehr nahe an seiner Schnittkante eingefaßt. Insbesondere herstellungstechnisch ist es vorteilhaft, wenn der Stützring Stege aufweist, die in entsprechender Ausnehmungen des Modulkörpers unter geringfügiger elastischer Verformung eingerastet sind.

Von besonderem Vorteil ist die Anordnung des Stützrings in der Vergußmasse und insbesondere am äußersten Ende des Modulkörpers im Zusammenhang mit einem bevorzugten erfindungsgemäßen Herstellungsverfahren, welches sich dadurch auszeichnet, daß der Stoffaustauschmodul beim Vergießen nicht rotiert, sondern näherungsweise vertikal stationär gehalten wird und man die Vergießmasse von

unten zuführt. Dieses Vergießen erfolgt in der Art, daß die Vergießmasse sowohl zwischen die Stoffaustauschfasern, als auch in den freien Raum zwischen dem Stützring und der Innenwandung des Modulkörpers strömt. Überraschenderweise hat sich nun herausgestellt, daß bei einem derartigen Verfahren unter Verwendung eines Stützrings ein sehr guter Verguß erreicht wird, obwohl die Zwischenräume zwischen den Fasern, in die die Vergußmasse eindringen muß, sehr viel kleiner sind, als der Ringspalt zwischen der Außenseite des Stützrings und der Innenwandung des Modulkörpers. Dieses vorteilhafte Ergebnis läßt sich dadurch erklären, daß die Vergußmasse zunächst in dem Ringspalt ansteigt, dann aber, insbesondere nach Unterbrechung der Zufuhr in der Aushärtephase im wesentlichen horizontal in die Zwischenräume zwischen den Hohlfasern eindringt.

Es hat sich sogar ergeben, daß besonders vorteilhafte Ergebnisse erreicht werden, wenn der Ringspalt zwischen Stützring-Außenseite und Modulkörper einen gewissen Mindestwert auf dem größten Teil der Stützringlänge nicht unterschreitet. Besonders bevorzugt ist daher eine Ausführungsform, bei der der lichte Abstand zwischen der Außenkante des Stützrings und der Innenwandung des Körpers mindestens 1,5 mm, insbesondere aber 2 - 2,5 mm beträgt.

Wählt man einen größeren Wert des Ringspaltes, so ergibt sich bei sonst gleichen Daten des Stoffaustauschmoduls eine größere Bauweise. Dies widerspricht der Tendenz zu einem möglichst kompakten Aufbau medizinisch-verwendeter Stoffaustauschmodule. Der Ringspalt ist daher so zu optimieren, daß er einerseits groß genug ist, um einen einwandfreien Verguß zu erlauben und andererseits so klein, daß eine möglichst kompakte Bauweise bei einer gegebenen gewünschten Faserfüllung erreicht wird.

Bei einem Stoffaustauschmodul der eingangs beschriebenen Art wird die gestellte Aufgabe weiterhin dadurch gelöst, daß die Hohlfaserfüllung über den größten Teil ihrer Länge von einem Netzschlauch umgeben ist, der in Querrichtung leichter als in Längsrichtung verformbar ist. Der Netzschlauch ist ein zweidimensional verknüpftes schlauchförmiges Gebilde mit netzförmiger Struktur./

Durch die Verwendung eines derartigen Netzschlauchs, welcher mindestens den größten Teil, vorzugsweise aber die ganze Länge der Stoffaustauschfaserfüllung überzieht, wird das Faserbündel zusammengefaßt. Durch diese Maßnahme ergibt sich, insbesondere in Kombination mit dem zuvor beschriebenen Stützring, ein bezüglich der Strömungswege des Blutes und gegebenenfalls der Reinigungsflüssigkeit besonders vorteilhaftes Produkt.

Die gemäß einem erfindungsgemäßen Verfahrensvorschlag vor dem Einführen in den Körper von einem Netzschlauch umgebenen Stoffaustauschfasern lassen sich besonders leicht in den Modulkörper einführen.

Bevorzugt ist der Netzschlauch teilweise von der Vergußmasse umgeben, wodurch er beim Vergießen fixiert wird und außerdem besonders gut zur Zentrierung und Formstabilisierung der Stoffaustauschfasern beiträgt.

Der Netzschlauch besteht vorzugsweise aus einem Kunststoff geringer Elastizität. Er muß so unelastisch sein, daß er sich bei der Herstellung des Moduls durch die beispielsweise beim Einführen der Stoffaustauschfaserfüllung auf ihn wirkenden Kräfte nicht wesentlich dehnt. Dies würde nämlich erfahrungsgemäß die Gefahr der Randgängigkeit erhöhen, weil der Netzschlauch nicht glatt genug an der Innenwand des Modulkörpers anläge.

Als Material kommen Kunststoffe in Betracht, die mit der Vergußmasse dicht vergießbar sind und die zuvor erwähnten Anforderungen an physiologische Unbedenklichkeit und Sterilisierbarkeit erfüllen. Beispielsweise kann der Netzschlauch aus einfädigen Kunststoffdrähten aus Polyurethan hergestellt sein, soweit eine hinreichend uneleastische Modifikation gewählt wird. Auch die für die Stoffaustauschfasern verwendeten Materialien sind teilweise für erfindungsgemäße Netzschläuche geeignet.

Der Durchmesser des Netzschlauches ist vorzugsweise so bemessen, daß sein Umfang im entspannten, d.h. kräftefreien Zustand, näherungsweise dem Umfang der inneren Wandung des Modulkörpers entspricht, an die der Netzschlauch im zusammengebauten Zustand des Stoffaustauschmoduls möglichst glattflächig anliegen soll. Praktische Versuche haben ergeben, daß die Stoffaustauschfasern durch den Netzschlauch im Betrieb des Moduls zusammengepreßt werden, wenn sein Umfang erheblich geringer ist, als der Innenumfang des Modulkörpers und der Netzschlauch demzufolge entgegen der Kraft seiner Querelastizität auseinandergezogen wird, wenn er auf die Stoffaustauschfaserfüllung aufgezogen wird. Wenn umgekehrt der Schlauchdurchmesser erheblich größer gewählt ist als der beschriebene Wert, bilden sich im zusammengebauten Zustand Falten an der inneren Wandung des Modulkörpers. In beiden Fällen folgt daraus eine unerwünschte Randgängigkeit der die Fasern umgebenden Flüssigkeit. Um dies zu vermeiden, sollte der Netzschlauch im eingebauten Zustand gegenüber seinem entspannten Zustand nicht gedehnt und auch nicht wesentlich gestaucht sein. Gleichzeitig ist eine möglichst gute Längsstabilität anzustreben.

Besonders bevorzugt ist die Einheitszelle des den Netzschlauch bildenden Netzes ein Rhombus. Zwei gegenüberliegende Ecken dieses Rhombus liegen auf einer zur
Längsrichtung des Moduls im wesentlichen parallelen
Geraden und schließen einen Winkel von jeweils maximal
90° ein. Durch eine derartige Ausgestaltungsform wird
das gewünschte Ergebnis der verschiedenen Dehnbarkeit
in Längsrichtung und Querrichtung des Netzschlauches
erreicht, insbesondere wenn man den Netzschlauch aus
Kunststoffdrähten gleichmäßiger Stärke und Dehnbarkeit
herstellt.

Besonders bevorzugt ist der Netzschlauch so ausgeführt,
daß die Kreuzungspunkte der das Netz bildenden Fäden
nicht dicker sind als die dazwischen liegenden Abschnitte
der Fäden. Dadurch wird die weiter oben erwähnte unerwünschte Randgängigkeit bei Stoffaustauschmodulen vermieden, bei denen die Außenseite der Fasern von einer
Reinigungsflüssigkeit umströmt wird.

Die Erfindung wird im folgenden anhand der in der
Zeichnung dargestellten Ausführungsbeispiele näher
erläutert. Es zeigen:

Fig. 1 - eine Prinzipdarstellung eines bekannten Stoffaustauschmoduls im Schnitt

Fig. 2 - eine perspektivische, teilweise aufgeschnittene
Darstellung eines Teils eines erfindungsgemäßen
Stoffaustauschmoduls

Fig. 3 - eine Aufsicht auf das Ende eines erfindungsgemäßen Stoffaustauschmoduls mit abgenommenem
Deckel (vor dem Vergießen)

Fig. 4 - eine abgewandelte Ausführungsform eines erfindungsgemäßen Stützringes

Fig. 5 - einen Querschnitt durch eine Aussparung im Modulkörper, die so gestaltet ist, daß der Steg eines Stützrings in ihr unter geringfügiger elastischer Verformung eingerastet ist.

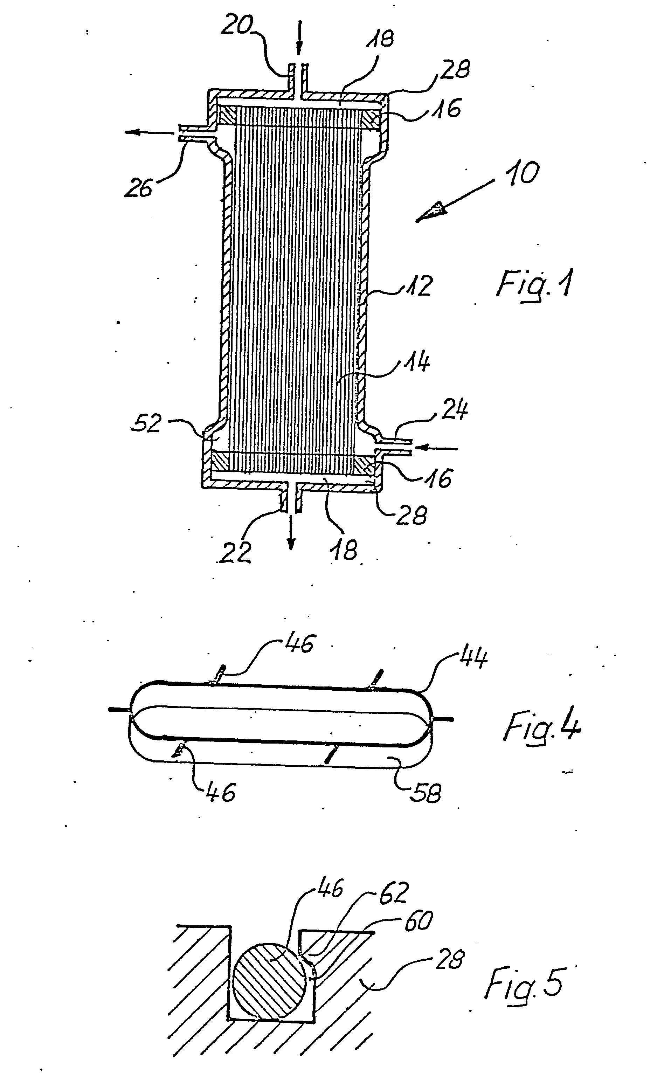

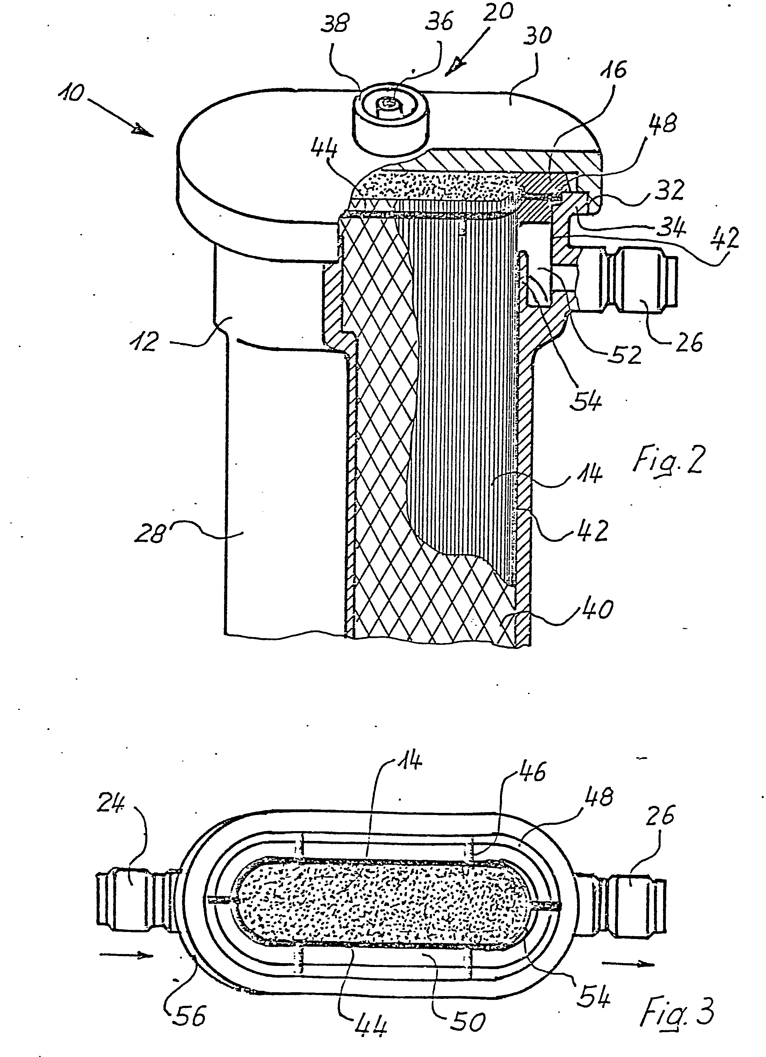

Fig. 1 zeigt schematisch einen Stoffaustauschmodul bekannter Ausführung, der in seiner Gesamtheit mit dem Bezugszeichen 10 bezeichnet ist. Er besteht aus einem hier vereinfacht einstückig dargestellten Gehäuse 12 und einer Stoffaustauschfaserfüllung 14 in Form eines Bündels von Hohlfasern. Die Stoffaustauschfasern sind an ihren Enden durch eine Vergußmasse 16 miteinander und mit der Innenwandung des Gehäuses 12 vergossen. Oberhalb der oberen und unterhalb der unteren Vergußmasse 16 befinden sich Blutverteilerräume 18, die zusammen mit dem Volumen im Inneren des Blutzuführungsstutzens 20 und des Blutabführungsstutzens 22 sowie mit dem in den Hohlfasern selbst enthaltenen Blutvolumen den Blutraum bilden.

Die Figur zeigt als Beispiel eines medizinisch verwendbaren Stoffaustauschmoduls einen Hämodialysator, der außer dem Blutkreislauf einen Kreislauf für eine Reinigungsflüssigkeit einschließt, die auch als Spülflüssigkeit bezeichnet wird. Zu diesem Zweck hat das Gehäuse einen Spülflüssigkeitzuführungsstutzen 24 und einen Spülflüssigkeitabführungsstutzen 26.

Im Betrieb wird das auf einem extra-korporalen Kreislauf vom Patienten kommende Blut durch den Stutzen 20 zugeführt und über den in der Figur oberen Blutverteilerraum 18 auf die Fasern des Faserbündels 14 gleichmäßig verteilt. Über den unteren Blutverteilerraum 18 und den Blutabführungsstutzen 22 wird das Blut wieder dem Patienten zugeführt. Bei der dargestellten Gestaltung der Blutverteilerräume 18 ergeben sich jeweils in ihrem in der Fig. 1 rechten und linken Bereich tote Winkel 28, in denen das Blut nur verhältnismäßig wenig strömt, weil in diesen Bereichen keine Hohlfasern in die Blutverteilerräume münden. Eine entsprechend schmalere Ausführung der Blutverteilerräume 18 würde solche toten Winkel weitgehend vermeiden. Bei den bekannten Einrichtungen ist diese Maßnahme jedoch nur in beschränktem Umfange möglich, weil sich die Stoffaustauschfasern während der Herstellung des Moduls verlagern und nicht genau zentriert in den Enden des Modulkörpers liegen. Die Blutverteilerräume müssen deswegen immer so groß sein, daß auch alle eventuell exzentrisch angeordneten Stoffaustauschfasern mit Blut versorgt werden.

In den Fig. 2 und 3 ist ein erfindungsgemäßer Dialysator dargestellt, wobei die zuvor erwähnten entsprechenden Bauteile die gleichen Bezugszeichen tragen. Das Gehäuse 12 besteht aus einem Modulkörper 28 und zwei Deckeln 30, von denen nur der obere in Fig. 2 dargestellt ist. Deckel und Körper haben an ihren Kanten geeignete Verbindungsprofile 32 und 34 und sind in bekannter Weise miteinander dicht verbunden. Am Deckel erkennt man den Blutzuführungsstutzen 20, der in der dargestellten Ausführungsform ein Blutzuführrohr 36 und einen mit einem nicht dargestellten Gewinde versehenen Haltering 38 einschließt.

Im Modulkörper befindet sich die Stoffaustauschfaserfüllung 14, die bei dem dargestellten Ausführungsbeispiel um einige Millimeter über die äußerste Kante des Modulkörpers in dessen Längsrichtung hinausragt. Die Stoffaustauschfaserfüllung 14 ist umgeben von einem Netzschlauch 40, der einerseits an der Innenwandung 42 des Modulkörpers 28 und andererseits an der äußersten Lage der Stoffaustauschfasern gut anliegt. Der Netzschlauch 40 ist in Fig. 2 abgeschnitten dargestellt, damit die Hohlfaserfüllung deutlicher erkennbar wird, tatsächlich umgibt er die Faserfüllung 14 vollständig und ist in Längsrichtung des Moduls auf gleicher Höhe wie diese abgeschnitten.

Stoffaustauschfaserfüllung 14 und Netzschlauch 40 sind in der Nähe ihrer Enden von einem Stützring 44 umgeben. Wie aus Fig. 3 besonders deutlich zu erkennen ist, ist der Stützring 44 bei dem beispielsweise dargestellten ovalen Dialysatortyp ebenfalls oval ausgeführt. Es sei in diesem Zusammenhang aber ausdrücklich daraufhingewiesen, daß die Erfindung nicht auf im Querschnitt ovale Stoffaustauschmodule beschränkt, sondern von der Formgebung des speziellen Moduls unabhängig ist. Der Stützring hat in der dargestellten Ausführungsform sechs Stege 46, die auf einer Nut 48 des Modulkörpers 28 aufliegen. In Fig. 3 erkennt man deutlich, daß der Stützring einerseits die Stoffaustauschfaserfüllung 14 mit dem in dieser Figur nicht erkennbaren Netzschlauch umgibt, andererseits umgeben ist von einem Ringspalt 50, der sich zwischen der Außenkante des Stützrings 44 und der Innenkante der Nut 48 erstreckt. Im dargestellten Beispiel sind die Stege näherungsweise gleich lang und damit ist auch der lichte Abstand des Ringspaltes überall etwa gleich groß. Im Zuge einer Optimierung der Hohlfaserfüllung, d.h. um eine möglichst große wirksame Fläche von Dialysefasern in einem möglichst kompakten Modul unterzubringen, kann es aber sinnvoll sein, den Ringspalt an verschiedenen Stellen des Stützringumfanges verschieden breit auszuführen. Praktische Versuche haben ergeben, daß der lichte Abstand aber einen Mindestwert von etwa 1,5 mm nicht unterschreiten sollte.

Der Stützring 44 ist eingebettet in eine Vergußmasse 16, durch die die Stoffaustauschfasern miteinander und mit der Innenseite des Modulkörpers verbunden werden. Gleichzeitig wird auch der Stützring und der Netzschlauch durch diese Vergußmasse fixiert und abgedichtet. Fig. 3 zeigt den Zustand des Moduls vor dem Vergießen, die Vergußmasse ist hier deshalb nicht zu erkennen.

An seinem unteren Ende ist der Stoffaustauschmodul 10 im wesentlichen spiegelbildlich zu dem in Fig. 2 dargestellten oberen Ende ausgeführt. Zwischen der oberen und unteren Vergußmasse 16 erstreckt sich die wirksame Länge des dargestellten Dialysators. Jeweils an den Enden der wirksamen Länge wird die Spülflüssigkeit über den Spülflüssigkeitszuführungsstutzen 24 zugeführt und über den Spülflüssigkeitsabführungsstutzen 26 abgeführt. Zur Verteilung der Spülflüssigkeit dienen Ringkanäle 52. Jeweils gegenüber den Spülflüssigkeitsstutzen sind Vorsprünge 54 an den Modulkörper 28 angegossen, die einer guten Spülflüssigkeitsverteilung dienen. Ebenfalls aus Strömungsgründen ist das Gehäuse 28 jeweils in dem Bereich 56, in dem die Spülflüssigkeitsstutzen 24 und 26 angegossen sind, geringfügig verbreitert.

Der Netzschlauch ist nahtlos hergestellt. Die Netzstruktur ist völlig flach ausgebildet, d.h. die Kreuzungspunkte der Knoten sind nicht dicker als die dazwischen liegenden Stücke. Die Einheitszelle des Netzes ist ein Rhombus, der sich in der Längsrichtung des Gehäuses erstreckt, d.h. zwei seiner Ecken liegen auf einer zur Gehäuselängsrichtung parallelen Geraden. Diese in Fig. 2 oberen und unteren Ecken bilden einen Winkel von maximal $90^\circ$, bevorzugt etwa $45^\circ - 70^\circ$.

Ein erfindungsgemäßer Stoffaustauschmodul kann beispielsweise folgendermaßen hergestellt werden: Der Modulkörper 28 wird mit den vorbereiteten, d.h. insbesondere gereinigten, auf passende Länge zugeschnittenen und in geeigneter Anzahl zusammengefaßten

Stoffaustauschfasern beschickt, wobei die Stoffaustauschfasern 14 bereits mit dem Netzschlauch 40 umhüllt sind. Durch die Verwendung des Netzschlauchs wird das Einführen erleichtert und es ergibt sich eine saubere, verlagerungsfreie Anordnung des Stoffaustauschfaserbündels 14 im Modulkörper 28. Danach werden die Stützringe 44 am oberen und unteren Ende des Moduls aufgesetzt. Es kann auch sinnvoll sein, mindestens einen der Stützringe schon vor dem Einführen des Faserbündels aufzusetzen und in geeigneter Weise am Modulkörper zu fixieren.

Zum Vergießen wird der Modulkörper im wesentlichen senkrecht eingespannt und an seinem offenen unteren Ende an eine Vergießform angeschlossen. Dann wird stationär von unten durch die Vergießform Polyurethan- Vergußmasse eingespritzt. Die Vergießform ist so konstruiert, daß die Vergußmasse in etwa gleichmäßig über den Querschnitt des Modulkörpers von unten ansteigt. Überraschenderweise hat sich gezeigt, daß bei diesem einfachen stationären Vergießverfahren unter Verwendung des erfindungsgemäßen Stützrings die Vergußmasse einwandfrei sowohl in den Ringspalt 50 als auch zwischen die Stoffaustauschfasern und gegebenenfalls zwischen die Fäden des Gitternetzes eindringt und eine dichte Verbindung zwischen diesen Bauteilen und der Innenwand 42 des Modulkörpers 28 bildet.

Nach dem Aushärten der Vergußmasse wird der Modulkörper 28 von der Vergießform abgenommen. Der Überstand der Vergußmasse 16 und der Stoffaustauschfaserfüllung 14 wird dann gemeinsam sauber auf die gewünschte Länge in einer Ebene senkrecht zur Längsrichtung des Modulkörpers abgeschnitten, wobei die inneren Kanäle der Stoffaustauschfasern geöffnet werden. Bei Verwendung des Netzschlauches wird dieser im gleichen Arbeitsgang mitbeschnitten.

Fig. 4 zeigt eine alternative Ausführungsform des Stützrings 44, die sich durch eine an den Stützring angegossene Manschette 58 auszeichnet. Ganz allgemein kann der Fachmann den Stützring im Rahmen der vorliegenden Erfindung in vielerlei Weise ausgestalten, um seine Eigenschaften noch weiter zu verbessern.

Fig. 5 zeigt einen Querschnitt durch einen Steg 46 eines erfindungsgemäßen Stützrings, der in einer Ausnehmung 60 des Körpers 28 unter geringfügiger elastischer Verformung eingerastet ist. Wie aus der Zeichnung zu ersehen ist, hat die Ausnehmung 60 eine vorspringende Nase 62, so daß der in der Zeichnung obere Bereich der Ausnehmung 60 enger ist, als der untere Bereich und auch geringfügig enger als der Durchmesser des Stegs 46. Der Steg 46 kann daher nur unter geringfügiger elastischer Verformung seines Querschnittes und/oder der Nase 62 in die Ausnehmung 60 eingesetzt und aus dieser herausgenommen werden. Durch eine derartige Ausführungsform wird der Stützring vor dem Vergießen in seiner Lage im Modulkörper 28 vorläufig fixiert, woraus sich fertigungstechnische Vorteile ergeben.

0039055

Bezugszeichenliste

10 Stoffaustauschmodul

12 Gehäuse von 10

14 Stoffaustauschfaserfüllung

16 Vergußmasse

18 Blutverteilerräume

20 Blutzuführungsstutzen

22 Blutabführungsstutzen

24 Spülflüssigkeitszuführungsstutzen

26 Spülflüssigkeitsabführungsstutzen

28 Modulkörper

30 Deckel

32 Verbindungsprofil von 30

34 Verbindungsprofil von 28

36 Zuführrohr

38 Haltering

40 Netzschlauch

42 Innere Wandung von 28

44 Stützring

46 Stege von 44

48 Nut von 28

50 Ringspalt

52 Ringkanal

54 Vorsprung

56 Verbreiterung von 28

58 Manschette

60 Ausnehmung

62 Nase

- 18 -

<u>A n s p r ü c h e</u>

1. Stoffaustauschmodul (10), insbesondere für medizinische Anwendungen, mit einem länglichen Körper (28), mit zwei offenen Enden, mit zwei Deckelteilen (30), durch die die Enden verschließbar sind und mit einer Füllung aus Stoffaustauschfasern (14), die im wesentlichen parallel zu der Längsrichtung des Körpers (28) verlaufen und im Bereich der Enden des Körpers (28) mittels einer Vergußmasse (16) miteinander und mit dem Körper (28), den die Fasern (14) umgebenden Raum abdichtend, vergossen sind, dadurch gekennzeichnet, daß mindestens im Bereich der Enden des Körpers (28) ein Stützring (44) in einer im wesentlichen zur Längsrichtung des Moduls senkrechten Ebene vorgesehen ist, der die Stoffaustauschfaserfüllung (14) umgibt und, die Faserfüllung zentrierend und im Querschnitt formstabilisierend, auf einer entsprechend geformten Struktur (48) des Körpers (28) abgestützt ist.

2. Stoffaustauschmodul nach Anspruch 1, bei dem die Stoffaustauschfasern von einer Reinigungsflüssigkeit umspült werden, dadurch gekennzeichnet, daß der Stützring (44) außerhalb der Zu- bzw. Abfünrungen (24, 26) der Reinigungsflüssigkeit angeordnet ist.

3. Stoffaustauschmodul nach einem der Ansprüche 1 oder 2, dadurch gekennzeichnet, daß der Stützring (44) in der Vergußmasse (16) angeordnet und von dieser allseitig umgeben ist.

4. Stoffaustauschmodul nach Anspruch 3, dadurch gekennzeichnet, daß der Stützring (44) Stege (46) aufweist, mit denen er auf einer entsprechenden Nut (48) in unmittelbarer Nähe des Endes des Körpers (28) abgestützt ist.

5. Stoffaustauschmodul nach einem der Ansprüche 1 bis 4, dadurch gekennzeichnet, daß der Stützring (44) Stege (46) aufweist, die in Ausnehmungen (60) des Körpers (28) unter geringfügiger elastischer Verformung eingerastet sind.

6. Stoffaustauschmodul nach einem der Ansprüche 1 bis 5, dadurch gekennzeichnet, daß zwischen der Außenkante des Stützringes (44) und der Innenwandung (42) des Körpers (28) ein lichter Abstand von mindestens 1,5 mm, vorzugsweise 2 - 2,5 mm, besteht.

7. Stoffaustauschmodul (10), insbesondere für medizinische Anwendungen, mit einem länglichen Körper (28) mit zwei offenen Enden, mit zwei Deckelteilen (30), durch die die Enden verschließbar sind und mit einer Füllung aus Stoffaustauschfasern (14), die von einer Reinigungsflüssigkeit umspült werden, welche im wesentlichen parallel zu der Längsrichtung des Körpers (28) verlaufen und im Bereich der Enden des Körpers mittels einer Vergußmasse miteinander und mit dem Körper (28), den die Fasern umgebenden Raum abdichtend, vergossen sind, insbesondere nach einem der Ansprüche 1 bis 6, wobei die Stoffaustauschfaserfüllung über den größten Teil ihrer Länge von einem Netzschlauch (40) umgeben und der Netzschlauch (40) teilweise in der Vergußmasse angeordnet ist, dadurch gekennzeichnet, daß der Netzschlauch (40) aus Kunststoff geringer Elastizität be-

- 20 -

steht, der Umfang des Netzschlauches (40) im entspannten Zustand im wesentlichen dem inneren Umfang des Modulkörpers (28) entspricht und die
Kreuzungspunkte des Netzschlauches (40) nicht dicker
sind als die zwischen diesen liegenden Abschnitte des
Netzschlauches (40).

8. Stoffaustauschmodul nach Anspruch 7, dadurch gekennzeichnet, daß die Einheitszelle des Netzes des Netzschlauches (40) einen Rhombus mit auf einer zur Längsrichtung des Moduls (10) im wesentlichen parallelen
Geraden liegenden Ecken ist, wobei diese Ecken einen
Winkel von maximal 90° bilden.

9. Verfahren zur Herstellung eines Stoffaustauschmoduls
nach einem der Ansprüche 1 bis 8, bei dem die vorbereiteten und in entsprechender Anzahl zusammengefaßten Stoffaustauschfasern in den vorgefertigten
Modulkörper eingeführt und anschließend untereinander
und mit diesem abdichtend vergossen werden, dadurch
gekennzeichnet, daß die Stoffaustauschfasern vor dem
Vergießen im Bereich der Enden des Modulkörpers von
einem diese zentrierenden und im Querschnitt formstabilisierenden, sich über Stege auf einer entsprechenden Struktur des Körpers abstützenden Stützring
umgeben werden.

10. Verfahren nach Anspruch 9, dadurch gekennzeichnet, daß
die Vergußmasse um den Stützring und die Enden der Stoffaustauschfasern vergossen sind.

11. Verfahren nach einem der Ansprüche 9 oder 10, dadurch gekennzeichnet, daß der Stoffaustauschmodul beim Vergießen näherungsweise vertikal stationär gehalten wird und die Vergußmasse dergestalt von unten zugeführt wird, daß sie zwischen die Stoffaustauschfasern und in den freien Raum zwischen den von dem Stützring zusammengefaßten Fasern und der Innenwandung des Modulkörpers strömt.

12. Verfahren zur Herstellung eines Stoffaustauschmoduls nach Anspruch 7, insbesondere nach einem der Ansprüche 9 bis 11, dadurch gekennzeichnet, daß die zusammengefaßten Stoffaustauschfasern vor dem Einführen in den Körper von einem Netzschlauch umgeben werden.

0039055
2·345-f

Fig.1

Fig.4

Fig.5

Fig. 2

Fig. 3

## Europäisches Patentamt
## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| **Kategorie** | **Kennzeichnung des Dokuments mit Angabe, soweit erforderlich, der maßgeblichen Teile** | **betrifft Anspruch** | |
| | US − A − 3 722 695 (THE DOW CHEMICAL CO.) * Anspruch 1; Spalte 3, Zeilen 39 bis 59; Fig. 4 * | 1,2 | A 61 M 1/03 B 01 D 13/00 |
| | DE − A1 − 2 910 214 (BAXTER TRAVENOL LABORATORIES) * Anspruch 1 * | 9 | |
| P | FR − A1 − 2 456 524 (CORDIS DOW CORP.) * Ansprüche 1, 9 und 10; Seite 3, Zeilen 28 bis 34; Seite 4, Zeilen 1 bis 8; Seite 4, Zeilen 18 bis 28; Fig. 4 * | 9 | **RECHERCHIERTE SACHGEBIETE (Int. Cl.³)** A 61 M 1/03 B 01 D 13/00 |
| A | DE − A − 2 259 949 (VEB PETROLCHE-MISCHES KOMBINAT SCHWEDT) * Ansprüche 1 und 2 * | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 17-07-1981 | CLOT |

EPA form 1503.1  08.78